**Europäisches Patentamt**

**European Patent Office**

**Office européen des brevets**

(19)

(11) Veröffentlichungsnummer: **0 028 387**
B1

(12) **EUROPÄISCHE PATENTSCHRIFT**

(45) Veröffentlichungstag der Patentschrift:
28.03.84

(51) Int. Cl.³: **G 01 K 7/00**

(21) Anmeldenummer: **80106607.7**

(22) Anmeldetag: **28.10.80**

(54) **Temperatursensor.**

(30) Priorität: **31.10.79 DE 2944015**

(43) Veröffentlichungstag der Anmeldung:
**13.05.81 Patentblatt 81/19**

(45) Bekanntmachung des Hinweises auf die Patenterteilung:
**28.03.84 Patentblatt 84/13**

(84) Benannte Vertragsstaaten:
**FR GB NL**

(56) Entgegenhaltungen:
**FR - A - 2 123 179**
**US - A - 3 440 883**
**US - A - 3 566 690**

(73) Patentinhaber: **SIEMENS AKTIENGESELLSCHAFT,**
**Berlin und München Wittelsbacherplatz 2,**
**D-8000 München 2 (DE)**

(72) Erfinder: **Hora, Peter, Dipl.-Ing., Osterwaldstrasse 141,**
**D-8000 München 40 (DE)**
Erfinder: **Tomasi, Gilbert, Dr. Ing., Zaunkönigring 9,**
**D-8911 Heimstetten (DE)**

Temperatursensor

Die Erfindung betrifft einen Temperatursensor aus einem Halbleiterkörper, der einerseits auf seiner Oberseite eine Isolierschicht aufweist, in der ein Fenster vorgesehen ist, durch das der Halbleiterkörper mit einem Metallkontakt versehen ist, und der andererseits auf seiner der Oberseite abgewandten Fläche eine Metallbelegung aufweist, so dass zwischen dem Metallkontakt und der Metallbelegung im Halbleiterkörper ein Ausbreitungswiderstand gebildet ist.

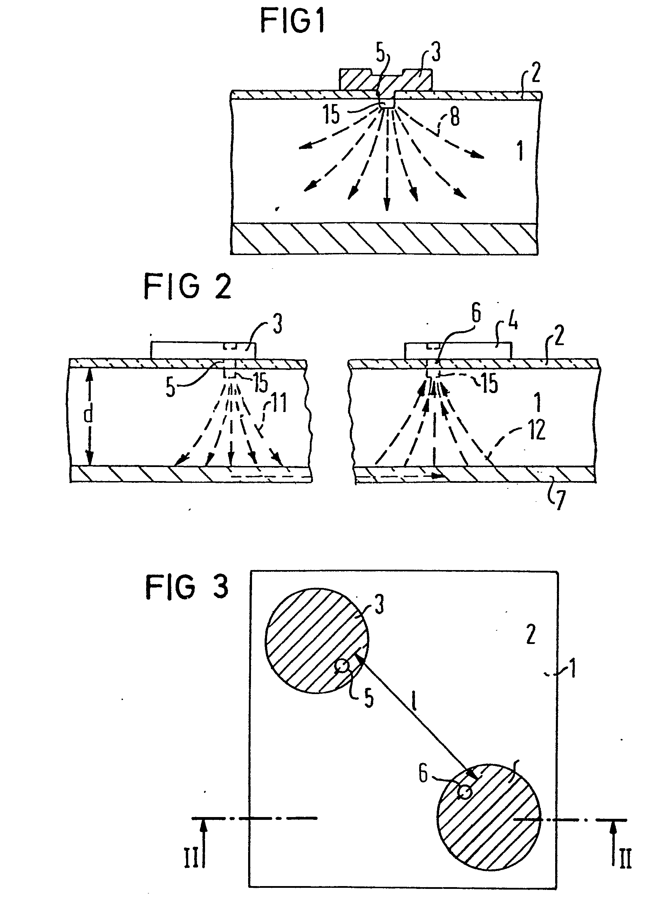

Ein bekannter Temperatursensor dieser Art (vergleiche Josef Schürmann: «Sensoren für die Automobil-Elektronik», Sonderdruck aus «Funkschau», Heft 14/1978) besteht, wie in Fig. 1 dargestellt ist, aus einem Halbleiterkörper 1 aus Silicium, auf dessen Oberseite eine Siliciumdioxidschicht 2 mit einem Fenster 5 vorgesehen ist, durch das ein Metallkontakt 3 über eine hochdotierte Zone 15 den Halbleiterkörper 1 kontaktiert. Auf der der Isolierschicht 2 abgewandten Seite ist der Halbleiterkörper 1 mit einem Metallträger 10 versehen, der zusammen mit dem Metallkontakt 3 die beiden Anschlüsse für den Temperatursensor bildet.

Dieser Temperatursensor arbeitet nach dem Ausbreitungswiderstandsprinzip, das an sich engtolerierte Widerstände mit guten und reproduzierbaren Temperaturbeiwerten erlaubt (vergleiche J. Schürmann a. a. O.).

Bei derartigen Temperatursensoren liegt aber zwangsläufig eine Stromrichtungsabhängigkeit vor, da ein bestimmter Widerstandswert des Temperatursensors bei einer bestimmten Temperatur von der Stromrichtung abhängig ist. Diese Stromrichtungsabhängigkeit beeinträchtigt somit die Messgenauigkeit, da je nach der Stromrichtung (vergleiche die Stromausbreitungslinien 8 in Fig. 1) unterschiedliche Widerstandswerte und damit auch unterschiedliche Temperaturwerte angezeigt werden.

Ein anderer bekannter Temperatursensor (vergleiche FR-A-2 123 179) verwendet einen unter der Oberfläche eines Halbleiterkörpers geführten hochdotierten Kanal, so dass die Stromausbreitungslinien nicht quer durch den Halbleiterkörper verlaufen. Solche Widerstände erfordern eine genaue Einstellung der Dotierungskonzentration im Kanal.

Es ist daher Aufgabe der Erfindung, einen nach dem Ausbreitungswiderstandsprinzip arbeitenden Temperatursensor ohne Stromrichtungsabhängigkeit des Widerstandswertes anzugeben.

Diese Aufgabe wird bei einem Temperatursensor der eingangs genannten Art erfindungsgemäss dadurch gelöst, dass auf der Oberseite zusätzlich mindestens ein weiteres Fenster vorgesehen ist, durch das den Halbleiterkörper mindestens ein weiterer Metallkontakt kontaktiert, der einen weiteren Ausbreitungswiderstand mit der Metallbelegung im Halbleiterkörper bildet, dass die Dicke des Halbleiterkörpers wesentlich kleiner als der Abstand zwischen den Mittelpunkten der Fenster ist, und dass die Metallbelegung als Verbindungsleiter zwischen den Ausbreitungswiderständen dient, um so den Ausbreitungswiderstand zwischen den Metallkontakten und der Metallbelegung stromrichtungsunabhängig beziehungsweise symmetrisch zu machen.

Weiterbildungen der Erfindung sind in den Unteransprüchen gekennzeichnet.

Bei der Erfindung dient also die Metallbelegung nicht als weiterer Anschluss für den Temperatursensor. Vielmehr ist ein zusätzliches Fenster in der Isolierschicht vorgesehen, durch das ein weiterer Metallkontakt mit dem Halbleiterkörper in Verbindung steht. Damit verlaufen die Stromausbreitungslinien vom einen Metallkontakt durch den Halbleiterkörper zur Metallbelegung und von der Metallbelegung zurück durch den Halbleiterkörper zum weiteren Metallkontakt. Die Stromausbreitungslinien sind also in beiden Richtungen durch den Halbleiterkörper geführt, so dass die gewünschte Stromrichtungsunabhängigkeit erreicht wird.

Die Erfindung ermöglicht also einen Temperatursensor, der nach dem Ausbreitungswiderstandsprinzip arbeitet und eine völlige Stromrichtungsunabhängigkeit des Widerstandes besitzt, die sonst nur mit einer idealen ohmschen Kontaktierung zu erreichen wäre, die aber technologisch schwierig zu realisieren ist.

Der erfindungsgemässe Temperatursensor vereinigt somit die Vorteile der nach dem Ausbreitungswiderstandsprinzip arbeitenden Temperatursensoren mit einem vollständigen symmetrischen Aufbau hinsichtlich der Stromausbreitungslinien, wodurch die unerwünschte Unsymmetrie in Abhängigkeit von der Stromrichtung vollkommen ausgeschlossen werden kann. Dies wird durch die elektrische Reihenschaltung der beiden Metallkontakte erreicht, wobei der Verbindungleiter zwischen den beiden Ausbreitungswiderständen durch die Metallbelegung gegeben ist.

Vorzugsweise haben die Metallkontakte im wesentlichen gleiche geometrische Formen.

Nachfolgend wird die Erfindung an Hand der Zeichnung näher erläutert. Es zeigen:

Fig. 1 einen bekannten Temperatursensor,

Fig. 2 und 3 den erfindungsgemässen Temperatursensor, und

Fig. 4 und 5 Messergebnisse, die mit dem bekannten Temperatursensor und mit dem erfindungsgemässen Temperatursensor erhalten werden.

In der Fig. 2, die einen vergrösserten Schnitt II-II der Fig. 3 zeigt, ist in der Isolierschicht 2 ein weiteres Fenster 6 vorgesehen, durch das ein weiterer Metallkontakt 4 zu dem aus Sicilium bestehenden Halbleiterkörper 1 hindurchgreift. Auf der der Isolierschicht 2 benachbarten Seite des Halbleiterkörpers 1 ist eine Metallbelegung 7 vorgesehen, die aber nicht als Anschluss für den Temperatursensor dient. Dessen Anschlüsse bestehen vielmehr aus den beiden Metallkontakten 3 und 4, die jeweils aus Mehrschichtmetallisierung hergestellt sind.

Wie in Fig. 2 dargestellt ist, verlaufen Stromausbreitungslinien 11 von der hochdotierten Zone 15 unterhalb des Metallkontaktes 3 zur Metallbelegung 7. Weiterhin verlaufen Stromausbreitungslinien 12 von der Metallbelegung 7 zur hochdotierten Zone 15 unterhalb des Metallkontaktes 4. Die Stromausbreitungslinien 12 haben also die zur Richtung der Stromausbreitungslinien 11 entgegengesetzte Richtung. Dadurch wird die angestrebte vollkommene Stromrichtungsunabhängigkeit erreicht.

Die Dicke d des Halbleiterkörpers 1 ist wesentlich kleiner als der Abstand l zwischen den Mitten der Fenster 5 und 6. Diese Fenster 5 und 6 können im übrigen bezüglich des Umrisses der Oberfläche der Metallkontakte 3 und 4 asymmetrisch angeordnet sein (vergleiche Fig. 3). Die Metallkontakte 3 und 4 und deren Anordnung zu den Fenstern 5 und 6 ist aber jeweils gleich.

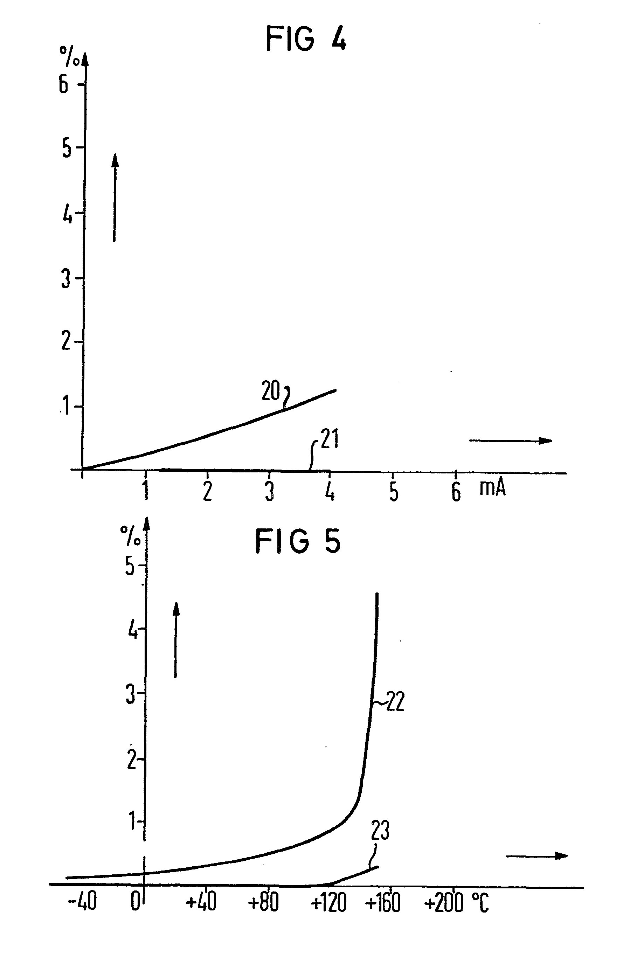

Die Fig. 4 zeigt die Abhängigkeit der Unsymmetrie vom Messstrom bei einer Gehäusetemperatur von 25° C. Dabei sind auf der Abszisse der Messstrom und auf der Ordinate die Unsymmetrie in Prozent aufgetragen. Eine Kurve 20 gibt die Messergebnisse für den bekannten Temperatursensor an, während eine Kurve 21 die Messergebnisse für den erfindungsgemässen Temperatursensor zeigt.

Weiterhin ist in Fig. 5 die Abhängigkeit der Unsymmetrie von der Gehäusetemperatur bei einem Messstrom vom 1 mA dargestellt. Dabei sind auf der Abszisse die Gehäusetemperatur und auf der Ordinate wiederum die Unsymmetrie in Prozent aufgetragen. Eine Kurve 22 zeigt die Unsymmetrie bei dem bekannten Temperatursensor, während eine Kurve 23 die Messergebnisse angibt, die mit dem erfindungsgemässen Temperatursensor erhalten werden.

Wie die Fig. 4 und 5 zeigen, kann durch die Erfindung ein grundsätzlich stromrichtungsunabhängiger Temperatursensor erhalten werden, der sehr genaue Messergebnisse liefert.

### Patentansprüche

1. Temperatursensor aus einem Halbleiterkörper (1), der einerseits auf seiner Oberseite eine Isolierschicht (2) aufweist, in der ein Fenster (5) vorgesehen ist, durch das der Halbleiterkörper (1) mit einem Metallkontakt (3) versehen ist, und der andererseits auf seiner der Oberseite abgewandten Fläche eine Metallbelegung (7) aufweist, so dass zwischen dem Metallkontakt (3) und der Metallbelegung (7) im Halbleiterkörper (1) ein Ausbreitungswiderstand gebildet ist, dadurch gekennzeichnet, dass auf der Oberseite zusätzlich mindestens ein weiteres Fenster (6) vorgesehen ist, durch das den Halbleiterkörper (1) mindestens ein weiterer Metallkontakt (4) kontaktiert, der einen weiteren Ausbreitungswiderstand mit der Metallbelegung (7) im Halbleiterkörper (1) bildet, dass die Dicke (d) des Halbleiterkörpers (1) wesentlich kleiner als der Abstand (l) zwischen den Mittelpunkten der Fenster (5, 6) ist, und dass die Metallbelegung (7) als Verbindungsleiter zwischen den Ausbreitungswiderständen dient, um so den Ausbreitungswiderstand zwischen den Metallkontakten (3, 4) und der Metallbelegung (7) stromrichtungsunabhängig beziehungsweise symmetrisch zu machen.

2. Temperatursensor nach Anspruch 1, dadurch gekennzeichnet, dass noch ein weiterer Metallkontakt vorgesehen ist.

3. Temperatursensor nach Anspruch 1 oder 2, dadurch gekennzeichnet, dass die Metallkontakte aus Mehrschichtmetallisierung bestehen.

4. Temperatursensor nach einem Ansprüche 1 bis 3, dadurch gekennzeichnet, dass der Halbleiterkörper (1) aus Silicium besteht.

5. Temperatursensor nach einem der Ansprüche 1 bis 4, dadurch gekennzeichnet, dass die Isolierschicht aus Siliciumdioxid besteht.

6. Temperatursensor nach einem der Ansprüche 1 bis 5, dadurch gekennzeichnet, dass das Fenster (5 beziehungsweise 6) bezüglich der Oberfläche des entsprechenden Metallkontaktes (3 beziehungsweise 4) jeweils asymmetrisch angeordnet ist.

7. Temperatursensor nach einem der Ansprüche 1 bis 6, dadurch gekennzeichnet, dass die Metallkontakte (3, 4) im wesentlichen gleiche geometrische Formen aufweisen.

### Claims

A temperature sensor consisting of a semiconductor body (1) which, on the one hand, is provided at its upper side with an insulating layer (2) in which there is arranged a window (5) through which the semiconductor body (1) is provided with a metal contact (3), and which, on the other hand, is provided on its surface facing away from the upper side with a metal coating (7), so that a spreading resistance is formed in the semiconductor body (1) between the metal contact (3) and the metal coating (7), characterised in that at least one further window (6) is additionally arranged on the upper side, through which window at least one further metal contact (4), which forms a further spreading resistance in the semiconductor body (1) with the metal coating (7), contacts the semiconductor body (1); that the thickness (d) of the semiconductor body (1) is substantially smaller than the distance (l) between the centre points of the windows (5, 6); and that the metal coating (7) serves as a connecting line between the spreading resistances in order to render the spreanding resitance between the metal contacts (3, 4) and the metal coating (7) independent of the current direction or symmetrical.

2. A temperature sensor according to Claim 1, characterised in that yet another metal contact is provided.

3. A temperature sensor according to Claim 1 or Claim 2, characterised in that the metal contacts consist of a multi-layer metallization.

4. A temperature sensor according to one of Claims 1 to 3, characterised in that the semiconductor body (1) consists of silicon.

5. A temperature sensor according to one of Claims 1 to 4, characterised in that the insulating layer consists of silicon dioxide.

6. A temperature sensor according to one of Claims 1 to 5, characterised in that the window (5 or 6 as the case may be) is asymmetrically arranged with respect to the surface of the corresponding metal contact (3 or 4 as the case may be).

7. A temperature sensor according to one of Claims 1 to 6, characterised in that metal contacts (3, 4) essentially have identical geometrical shapes.

**Revendications**

1. Capteur de température constitué par un corps semiconducteur (1) qui possède d'une part sur sa face supérieure une couche isolante (2) dans laquelle est prévue une fenêtre (5) à travers laquelle le corps semiconducteur (1) est muni d'un contact métallique (3), et qui possède d'autre part sur sa surface tournée à l'opposé de la face supérieure, un revêtement métallique (7) de telle sorte qu'une résistance diffusée est formée dans le corps semiconducteur (1) entre le contact métallique (3) et le revêtement métallique (7), caractérisé par le fait que sur la face supérieure est prévue en supplément, au moins une autre fenêtre (5) à travers laquelle au moins un autre contact métallique (4), qui forme avec le revêtement métallique (7) dans le corps semiconducteur (1) une autre résistance diffusée, contacte le corps semiconducteur (1), que l'épaisseur (d) du corps semiconducteur (1) est nettement inférieure à l'écartement (l) entre les centres des fenêtres (5, 6) et que le revêtement métallique (7) sert de conducteur de liaison entre les résistances diffusées, de manière à rendre indépendante du sens du courant ou symétrique la résistance diffusée entre les contacts métalliques (3, 4) et le revêtement métallique (7).

2. Capteur de témperature suivant la revendication 1, caractérisé par le fait qu'il est encore prévu un contact métallique supplémentaire.

3. Capteur de température suivant la revendication 1 ou 2, caractérisé par le fait que les contacts métalliques sont constitués par une métallisation à plusieurs couches.

4. Capteur de température suivant l'une des revendications 1 à 3, caractérisé par le fait que le courant semiconducteur (1) est constitué par du silicium.

5. Capteur de température suivant l'une des revendications 1 à 4, caractérisé par le fait que la couche isolante est constituée par du bioxyde de silicium.

6. Capteur de température suivant l'une des revendications 1 à 5, caractérisé par le fait que la fenêtre (5 ou 6) est disposée de façon dissymétrique par rapport à la surface du contact métallique correspondant (3 ou 4).

7. Capteur de température suivant l'une des revendications 1 à 6, caractérisé par le fait que les contacts métalliques (3, 4) possèdent des formes géométriques essentiellement identiques.

## FIG 1

## FIG 2

## FIG 3

# FIG 4

# FIG 5